# EUROPÄISCHE PATENTSCHRIFT

(11) **EP 0 483 479 B1**
(45) Veröffentlichungstag und Bekanntmachung des Hinweises auf die Patenterteilung: **08.03.1995**
(21) Anmeldenummer: 91114492.1
(22) Anmeldetag: 29.08.1991
(51) Int. Cl.: C07F 7/18, B01J 31/00

(54) **Alkoxysilylgruppen aufweisende Pyridiniumsalze**
Pyridiniumsalts containing alkoxysilyl groups
Sels de pyridinium contenant des groupements alkoxysilyl

(30) Priorität: 31.10.1990 DE 4034613
(43) Veröffentlichungstag der Anmeldung: 06.05.1992
(73) Patentinhaber: HÜLS AKTIENGESELLSCHAFT, 45764 Marl (DE)
(72) Erfinder: Bernhardt, Günther, Dr., W-5205 St. Augustin 2 (US); Haas, Margret, W-5200 Köln 60 (DE); Kragl, Heinz, W-5210 Troisdorf 15 (DE); Larson, Gerald Louis, Prof.Dr., W-5210 Troisdorf 1 (DE)

(56) Entgegenhaltungen:
- US-A- 3 700 844
- US-A- 4 418 195
- TETRAHEDRON LETTERS vol. 25, no. 32, 1984, pages3383 - 3386; BRUNELLE, D.J. ET AL: 'N-ALKYL-4-(N',N'-DIALKYLAMINO)PYRIDINIUMSALTS: THERMALLY STABLE PHASE TRANSFER CATALYSTS FOR NUCLEOPHILIC AROMATICDISPLACEMENT'

## Beschreibung

Gegenstand der vorliegenden Erfindung sind Alkoxysilylgruppen aufweisende Pyridiniumsalze, deren Herstellung sowie ihre Verwendung.

Der nächstliegende Stand der Technik ergibt sich aus Tetrahedron Letters, Band 25, Nr. 32, 3383-3386). Dort sind (vgl. Seite 3383, Formeln 1 und 3) Pyridiniumsalze als Phasentransferkatalysatoren mit verbesserter Stabilität beschrieben. Davon unterscheiden sich die anmeldungsgemäßen Verbindungen durch die Anwesenheit des Organosilanradikals X anstelle der tert. Alkylgruppe im Stand der Technik.

In der japanischen Patentanmeldung 51348/65 ist die Herstellung von Methacryloxyalkylalkoxysilanen und Acryloxyalkylalkoxysilanen aus Alkalimethacrylaten oder -acrylaten und Chloralkylalkoxysilanen unter Verwendung von quaternären Ammoniumsalzen als Fest-Flüssig-Phasentransfer-Katalysatoren beschrieben. Als Reaktionstemperaturen werden 140 bis 180 °C angegeben. Nach C. M. Starks und C. Liotta (Phase Transfer Catalyses, Academic Press, New York 1978, Seite 64) verlieren Ammoniumsalze aber schnell ihre Aktivität oberhalb 110 bis 120 °C. Dies erklärt die niedrigen Ausbeuten des in der japanischen Anmeldung beanspruchten Verfahrens.

Durch den thermischen Zerfall der quaternären Ammoniumsalze in Gegenwart von Alkalimethacrylaten oder -acrylaten werden als Begleitprodukte tertiäre Amine und Alkylmethacrylate oder -acrylate gebildet, die aufgrund eines ähnlichen Siedeverhaltens nur schwer von Methacryloxyalkylalkoxysilanen oder Acryloxyalkylalkoxysilanen destillativ zu trennen sind.

Methacryloxy- und Acryloxyalkylalkoxysilane sind sowohl häufig verwendete Haftvermittler in Schlichten für z. B. Glasfasern als auch technisch interessante Comonomere für die Herstellung von Dichtungsmassen und feuchtigkeitshärtenden Lacksystemen. Dem Fachmann ist aber bekannt, daß für eine technische Anwendung dieser Methacryloxy- oder Acryloxyalkylalkoxysilane, z. B. in Glasfaserschlichten oder in Polymerisationsreaktionen, eine hohe Reinheit erforderlich ist.

Es bestand daher das Problem, Phasentransfer-Katalysatoren für die Herstellung von Methacryloxy- und Acryloxyalkyl-alkoxysilanen bereitzustellen, die eine höhere Temperaturstabilität aufweisen als die bekannten quaternären Ammoniumsalze und gleichermaßen zu hohen Ausbeuten und großen Reinheiten der Silane führen,ohne daß kostspielige Reinigungsverfahren notwendig sind.

Im folgenden werden die Methacryloxy- und Acryloxyalkylalkoxysilane auch als Acrylsilane bezeichnet.

Das Problem wurde durch Auffinden neuer, Alkoxysilylgruppen aufweisender Pyridiniumsalze der allgemeinen Formel I 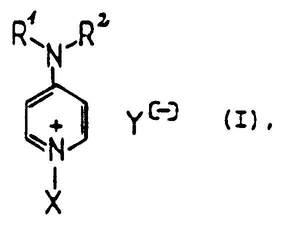
gelöst, in der Y⁽⁻⁾ für ein Halogenidion, R¹ und R² für gleiche oder ungleiche aliphatische Reste mit 1 bis 12 C-Atomen und/oder cycloaliphatische Reste mit 5 bis 7 C-Atomen und/oder Benzylreste stehen, oder gemeinsame Bestandteile einer Gruppierung (̵CH₂)̵ₐ sein können, worin a für 4 oder 5 oder 6 steht und der Ring zwischen zwei C-Atomen durch ein Sauerstoffatom unterbrochen sein kann und X ein Organosilanradikal 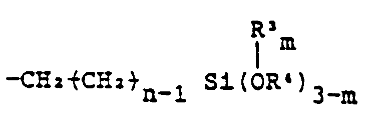
bedeutet, worin R³ für einen Alkylrest mit 1 bis 4 C-Atomen, R⁴ für Alkylgruppen mit 1 bis 4 C-Atomen oder Alkoxyalkylgruppen mit einer Gesamt-C-Zahl von 2 bis 4, m für 0 oder 1 oder 2 und n für 1 oder 3 oder 4 stehen.

Das Verfahren zur Herstellung der neuen Pyridiniumsalze der allgemeinen Formel I ist dadurch gekennzeichnet, daß N,N-di-substituierte 4-Aminopyridine der allgemeinen Formel II 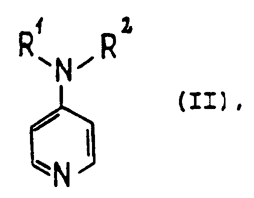
in der R¹ und R² die obige Bedeutung haben, mit Halogenalkylsilanen der allgemeinen Formel III 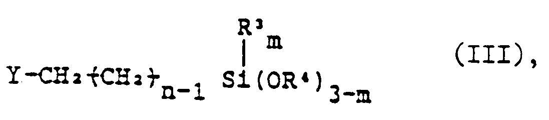
in der Y Chlor oder Brom bedeutet und R³, R⁴, m und n die obige Bedeutung haben, umgesetzt werden.

N,N-di-substituierte 4-Aminopyridine der allgemeinen Formel II, die als Ausgangsverbindungen für die erfindungsgemäßen Pyridiniumsalze dienen, sind zum Beispiel:
4-Dimethylaminopyridin,
4-Diethylaminopyridin,
4-Di-n-butylaminopyridin,
4-Di-n-hexylamionopyridin,
4-(4'-Methylpiperidinyl)-pyridin,
4-Morpholinyl-pyridin,
4-Dicyclohexylaminopyridin,
4-Dibenzylaminopyridin oder
4-Piperidinyl-pyridin.

Als Beispiele für Halogenalkysilane der allgemeinen Formel III, die mit den N,N-di-substituierten Pyridinen zu den erfindungsgemäßen Pyridiniumsalzen umgesetzt werden, werden genannt:
3-Chlorpropyltrimethoxysilan,
3-Chlorpropyltriethoxysilan,
Chlormethyltrimethoxysilan,
4-Chlorbutyltrimethoxysilan,
4-Chlorbutyltriethoxysilan,
3-Chlorpropyl-methyl-dimethoxysilan,
3-Chlorpropyl-dimethyl-methoxysilan,
3-Chlorpropyl-ethyl-dimethoxysilan,
Chlormethyl-dimethyl-methoxysilan,
3-Chlorpropyl-tris-(methoxyethoxy)silan oder
4-Chlorbutyl-tris-(methoxyethoxy)silan.

Die erfindungsgemäße Herstellung der neuen Pyridiniumsalze erfolgt durch Umsetzung der entsprechenden N,N-di-substituierten 4-Aminopyridine mit Halogenalkylsilanen in Substanz oder unter Verwendung eines zusätzlichen Lösungsmittels. Das Molverhältnis 4-Aminopyridin zu Halogenalkylsilan kann 1 : 1 bis 1 : 100 betragen. Vorteilhaft wird als Lösungsmittel überschüssiges Chloralkylsilan verwendet.

Andere geeignete Lösungsmittel sind:
Toluol,
Xylol,
Dimethylformamid,
Petrolether,
Methanol,
Ethanol oder
Chlorbenzol.

Die Herstellung der Pyridiniumsalze erfolgt bei 80 °C bis 180 °C, vorzugsweise 100 °C bis 140 °C.

Die gebildeten Salze können nach beendeter Reaktion durch Filtration oder durch Abdestillieren des Lösungsmittels isoliert werden.

Die neuen, Alkoxysilylgruppen aufweisenden Pyridiniumsalze können als solche oder auch zusammen mit dem Lösungsmittel als Phasentransfer-Katalysatoren verwendet werden.

Die Erfindung wird anhand der nachfolgenden Beispiele näher erläutert.

### Beispiel 1

### 1-(3'-Trimethoxysilylpropyl)-4-dimethylamino-pyridinium-chlorid

6,1 g (0,05 Mole) 4-Dimethylaminopyridin werden zusammen mit 9,9 g (0,05 Mole) 3-Chlorpropyltrimethoxysilan in 50 g trockenem o-Xylol gelöst, und die Mischung wird für 15 Minuten zum Sieden erhitzt. Von den sich ausbildenden zwei Phasen erstarrt die untere beim Abkühlen kristallin. Die Kristalle sind hygroskopisch und werden unter Feuchtigkeitsausschluß abgesaugt. Nach Waschen mit 70 °C heißem o-Xylol und 50 °C heißem n-Hexan werden sie im Vakuum getrocknet. Die Ausbeute beträgt 14,4 g, entsprechend 90,2 % der Theorie. Das erhaltene Pyridiniumsalz weist einen Schmelzpunkt von 140 bis 142 °C auf. Die Chloridionen-Bestimmung nach Volhard ergibt: 10,99 % Chlor (berechnet: 11,05 %).

| Elementaranalyse: | | |
|---|---|---|
| Stickstoff: | gefunden 8,6 %, | berechnet 8,7 % |
| Silicium: | gefunden 8,9 %, | berechnet 8,8 %. |

### Beispiel 2

### 1-(3'-Triethoxysilylpropyl)-4-(4'-methylpiperidinyl)-pyridiniumchlorid

Entsprechend Beispiel 1 werden 5,3 g (0,03 Mole) 4-(4'-Methylpiperidinyl)-pyridin mit 7,2 g (0,03 Mole) 3-Chlorpropyltriethoxysilan umgesetzt. Ausbeute an Pyridiniumsalz: 11,4 g, entsprechend einer Ausbeute von 91,3 % der Theorie. Chloridgehalt: gefunden 8,49 %, berechnet 8.52 %.

| Elementaranalyse: | | |
|---|---|---|
| Stickstoff: | gefunden 6,8 %, | berechnet 6,7 %. |
| Silicium: | gefunden 6,8 %, | berechnet 6,7 %. |

### Beispiel 3 (Anwendungsbeispiel)

1,74 g (0,015 Mole) 4-Dimethylaminopyridin werden in 201,5 g (1,015 Mole) 3-Chlorpropyltrimethoxysilan gelöst, unter Rühren auf 135 °C erhitzt und 15 Minuten bei dieser Temperatur belassen. Nach Abkühlung auf 60 °C werden 124,2 g (1 Mol) Kaliummethacrylat und 0,6 g N,N'-Diphenyl-p-phenylendiamin als Stabilisator hinzugefügt und die Mischung wieder auf 135 °C gebracht. Nach 1 Stunde wird abgekühlt, das entstandene Kaliumchlorid abfiltriert und mit 80 g Methanol gewaschen. Aus den vereinigten Filtraten wird das Methanol abgedampft und der Rückstand unter vermindertem Druck destilliert. Es werden 228,1 g 3-Methacryloxypropyltrimethoxysilan vom Siedepunkt 83 °C (0,4 mbar) erhalten. Bezogen auf eingesetztes Kaliummethacrylat beträgt die Ausbeute 92 %. Die Reinheit beträgt 99,0 %. Im Gaschromatogramm sind nur Spuren von 4-Dimethylamino-pyridin nachweisbar.

### Beispiel 4 (Vergleichsbeispiel zu Beispiel 3)

124 g (1 Mol) Kaliummethacrylat werden mit 198,5 g (1 Mol) 3-Chlorpropyltrimethoxysilan, 3,0 g (0,016 Mole) Trimethylbenzylammoniumchlorid und 0,5 g N,N'-Diphenyl-p-phenylendiamin gemischt und unter Rühren auf 135 °C erhitzt. Nach 2 Stunden wird abgekühlt, der Salzanteil abfiltriert und mit 60 g Methanol gewaschen. Aus den vereinigten Filtraten wird das Methanol abgedampft und der Rückstand unter reduziertem Druck destilliert. Es werden 195 g Destillat vom Siedebereich 60 bis 86 °C (0,3 mbar) erhalten. Die gaschromatographische Analyse ergibt einen Anteil von 35,0 g 3-Methacryloxypropyltrimethoxysilan, was einer Ausbeute von 14,1 %, bezogen auf eingesetztes Kaliummethacrylat, entspricht. Das Destillat enthält 0,37 % Dimethylbenzylamin und 0,48 % Benzylmethacrylat. Durch Destillation über eine Füllkörperkolonne (Füllmaterial Raschig-Ringe) unter reduziertem Druck werden 28,5 g 3-Methacryloxypropyltrimethoxysilan vom Kp 90 °C (1 mbar) erhalten. Die Reinheit beträgt nach gaschromatographischer Analyse 97,1 %.

## Patentansprüche

1. Alkoxysilylgruppen aufweisende Pyridiniumsalze der allgemeinen Formel I 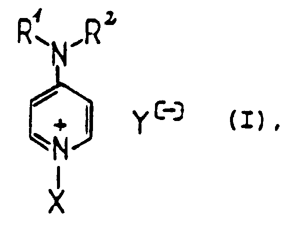 in der Y⁽⁻⁾ für ein Halogenidion, R¹ und R² für gleiche oder ungleiche aliphatische Reste mit 1 bis 12 C-Atomen und/oder cycloaliphatische Reste mit 5 bis 7 C-Atomen und/oder Benzylreste stehen, oder gemeinsame Bestandteile einer Gruppierung (̵CH₂)̵ₐ sein können, worin a für 4 oder 5 oder 6 steht und der Ring zwischen zwei C-Atomen durch ein Sauerstoffatom unterbrochen sein kann, dadurch gekennzeichnet, daß X ein Organosilanradikal 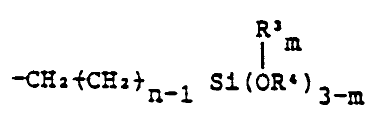 ist, worin R³ für einen Alkylrest mit 1 bis 4 C-Atomen, R⁴ für Alkylgruppen mit 1 bis 4 C-Atomen oder Alkoxyalkylgruppen mit einer Gesamt-C-Zahl von 2 bis 4, m für 0 oder 1 oder 2 und n für 1 oder 3 oder 4 stehen.

2. Verfahren zur Herstellung von Alkoxysilylgruppen aufweisenden Pyridiniumsalzen der allgemeinen Formel I, dadurch gekennzeichnet, daß N,N-di-substituierte 4-Aminopyridine der allgemeinen Formel II 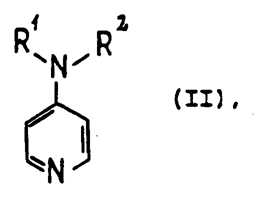 in der R¹ und R² für gleiche oder ungleiche aliphatische Reste mit 1 bis 12 C-Atomen und/oder cycloaliphatische Reste mit 5 bis 7 C-Atomen und/oder Benzylreste stehen, oder Gemeinsamer Bestandteil einer Gruppierung (̵CH₂)̵ₐ sein können, worin a für 4 oder 5 oder 6 steht und der Ring zwischen zwei C-Atomen durch ein Sauerstoffatom unterbrochen sein kann, mit Halogenalkylsilanen der allgemeinen Formel III 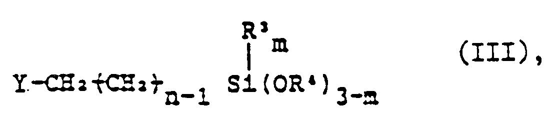 in der Y Chlor oder Brom bedeutet, R³ für einen Alkylrest mit 1 bis 4 C-Atomen, R⁴ für Alkylgruppen mit 1 bis 4 C-Atomen oder Alkoxyalkylgruppen mit einer Gesamt-C-Zahl von 2 bis 4, m für 0 oder 1 oder 2 und n für 1 oder 3 oder 4 stehen, umgesetzt werden.

3. Verfahren nach Anspruch 2, dadurch gekennzeichnet, daß die Umsetzung bei Temperaturen von 80 bis 180 °C durchgeführt wird.

4. Verwendung der Pyridiniumsalze nach Anspruch 1 als Phasentransfer-Katalysatoren.

## Claims

1. Pyridinium salts of the general formula I having alkoxysilyl groups 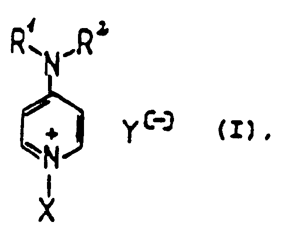 in which Y⁽⁻⁾ stands for a halide ion, R¹ and R² stand for the same or different aliphatic residues with 1 to 12 C-atoms and/or cycloaliphatic residues with 5 to 7 C-atoms and/or benzyl residues, or can be cooperating constituents of a group -(CH₂)-ₐ, wherein a stands for 4 or 5 or 6 and the ring can be interrupted between two C-atoms by an oxygen atom, characterised in that X is an organosilane radical 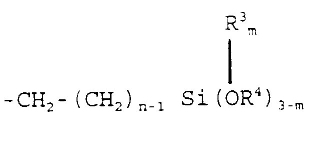 wherein R³ stands for an alkyl residue with 1 to 4 C-atoms, R⁴ stands for alkyl groups with 1 to 4 C-atoms or alkoxyalkyl groups with a total C-number of 2 to 4, m stands for 0 or 1 or 2 and n stands for 1 or 3 or 4.

2. Method for the preparation of pyridinium salts of the general formula I having alkoxysilyl groups, characterised in that N,N-di-substituted 4-aminopyridines of the general formula II 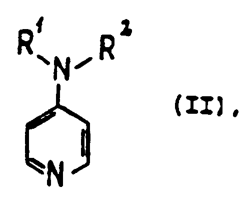 in which R¹ or R² stands for the same or different aliphatic residues with 1 to 12 C-atoms and/or cycloaliphatic residues with 5 to 7 C-atoms and/or benzyl residues or can be cooperating constituents of a group -(CH₂)ₐ, wherein a stands for 4 or 5 or 6 and the ring can be interrupted between two C-atoms by an oxygen atom, are reacted with haloalkylsilanes of the general formula III 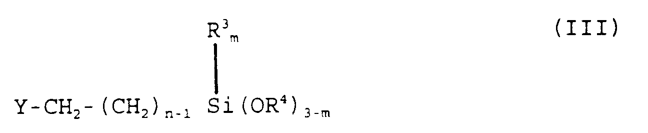 in which Y denotes chlorine or bromine, R³ stands for an alkyl residue with 1 to 4 C-atoms, R⁴ stands for alkyl groups with 1 to 4 C-atoms or alkoxyalkyl groups with a total C-number of 2 to 4, m stands for 0 or 1 or 2 and n stands for 1 or 3 or 4.

3. Method according to claim 2, characterised in that the reaction is carried cut at temperatures of 80 to 180°C.

4. Use of pyridinium salts according to claim 1 as phase transfer catalysts.

## Revendications

1. Sels de pyridinium présentant des groupes alcoxysilyles, de formule générale I: 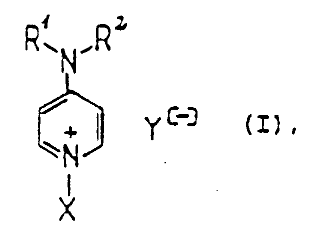 dans laquelle Y(-) représente un ion halogénure, R¹ et R² représentent des restes identiques ou différents comportant 1 à 12 atomes de carbone et/ou des restes cycloaliphatiques comportant 5 à 7 atomes de carbone et/ou des restes benzyles, ou bien ils peuvent former ensemble un groupement -(CH₂)-ₐ, dans lequel a vaut 4 ou 5 ou 6, et le noyau situé entre deux atomes de carbone peut être interrompu par un atome d'oxygène, sels caractérisés en ce que X est un radical d'organosilane : 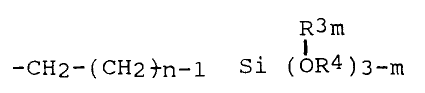 formule dans laquelle R³ représente un reste alkyle ayant 1 à 4 atomes de carbone ;R⁴ représente des groupes alkyles ayant 1 à 4 atomes de carbone ou des groupes alcoxyalkyles ayant un nombre total de 2 à 4 atomes de carbone; m vaut 0 ou 1 ou 2 et n vaut 1 ou 3 ou 4.

2. Procédé de préparation de sels de pyridinium présentant des groupes alcoxysilyles de formule générale I, procédé caractérisé en ce qu'on fait réagir des 4-aminopyridines N,N-di-substituées de formule générale II : 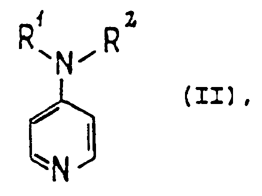 dans laquelle R¹ et R² représentent des restes aliphatiques identiques ou différents ayant 1 à 12 atomes de carbone et/ou des restes cycloaliphatiques ayant 5 à 7 atomes de carbone et/ou des restes benzyles; ou bien ils peuvent former ensemble un groupement -(CH₂)-ₐ, dans lequel a vaut 4 ou 5 ou 6 et le noyau situé entre deux atomes de carbone peut être interrompu par un atome d'oxygène avec des halogéno-alkylsilanes de formule générale III : 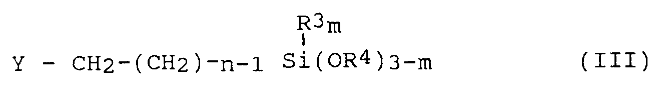 dans laquelle Y représente du chlore ou du brome; R³ représente un reste alkyle ayant 1 à 4 atomes de carbone ; R⁴ représente des groupes alkyles ayant 1 à 4 atomes de carbone ou des groupes alcoxyalkyles ayant au total un nombre d'atomes de carbone de 2 à 4; m vaut 0 ou 1 ou 2 et n vaut 1 ou 3 ou 4.

3. Procédé selon la revendication 2, caractérisé en ce qu'on effectue la réaction à des températures de 80 à 180°C.

4. Utilisation des sels de pyridinium selon la revendication 1 comme catalyseurs de transfert de phases.
